# EUROPÄISCHE PATENTANMELDUNG

(11) **EP 2 444 199 A1**
(43) Veröffentlichungstag der Anmeldung: **25.04.2012**
(21) Anmeldenummer: 10188222.3
(22) Anmeldetag: 20.10.2010
(51) Int. Cl.: B24B 7/17, B23Q 17/22, B23Q 1/00, B23Q 5/40

(54) **Doppelseiten-Planschleifmaschine**

(71) Anmelder: Supfina Grieshaber GmbH & Co. KG, 77709 Wolfach (DE)
(72) Erfinder: Wirch, Harald, 42929 Wermelskirchen (DE); Winkens, Markus, Dipl.-Ing., 77723 Gengenbach (DE); Bergmann, Torsten, 77746 Schutterwald (DE)
(74) Vertreter: Dreiss

(57) **Zusammenfassung**

Die Erfindung betrifft eine Doppelseiten-Planschleifmaschine (10), mit einem Maschinenuntergestell (12), welches eine erste Schleifscheibe (42) umfasst, mit einem Maschinenoberteil (20), welches eine zweite Schleifscheibe (44) umfasst, wobei das Maschinenoberteil (20) in wenigstens drei Auflagebereichen (22, 24, 26) auf dem Maschinenuntergestell (12) aufliegt, wobei in mindestens einem der Auflagebereiche (22, 24, 26) eine Einstelleinrichtung (28, 30, 32) zur Einstellung der Lage des Maschinenoberteils (20) relativ zu dem Maschinenuntergestell (12) vorgesehen ist, wobei die Einstelleinrichtung (28, 30, 32) eine mit dem Maschinenuntergestell (12) oder dem Maschinenoberteil (20) verbundene Schraube und eine mit der Schraube verschraubte, das Maschinenoberteil abstützende Einstellmutter umfasst, wobei die Einstellmutter entlang ihrer Umfangsseite verteilte Ausnehmungen oder Vorsprünge aufweist, welche mit Vorsprüngen oder Ausnehmungen eines motorisch antreibbaren ersten Antriebselements formschlüssig in Eingriff stehen.

## Beschreibung

Die Erfindung betrifft eine Doppelseiten-Planschleifmaschine, mit einem Maschinenuntergestell, welches eine erste Schleifscheibe umfasst, mit einem Maschinenoberteil, welches eine zweite Schleifscheibe umfasst, wobei das Maschinenoberteil in wenigstens drei Auflagebereichen auf dem Maschinenuntergestell aufliegt, wobei in mindestens einem der Auflagebereiche eine Einstelleinrichtung zur Einstellung der Lage des Maschinenoberteils relativ zu dem Maschinenuntergestell vorgesehen ist.

Aus der DE 103 45 335 A1 ist eine Flachschleifmaschine zum planparallelen Schleifen von Werkstückoberflächen bekannt, mit einem Maschinenuntergestellt, welches eine erste Schleifspindel für eine erste Schleifscheibe umfasst, mit einem Maschinenoberteil, welches eine zweite Schleifspindel für eine zweite Schleifscheibe umfasst, wobei das Maschinenoberteil in wenigstens drei Auflagebereichen auf dem Maschinenuntergestell aufliegt, mit Einstellmitteln in den Auflagebereichen zur Verstellung der Lage des Maschinenoberteils gegenüber dem Maschinenuntergestell, wobei eine Messeinrichtung zur Bestimmung der Lage des Maschinenoberteils gegenüber dem Maschinenuntergestell vorgesehen ist, wobei eine Auswerteeinheit zur Berechnung der Solllage des Maschinenoberteils aus maschinenspezifischen, werkzeugspezifischen und/oder werkstückspezifischen Eingangsgrößen vorgesehen ist, wobei zum Betreiben der Einstellmittel von der Auswerteeinheit ansteuerbare Stellmotoren vorgesehen sein können.

Hiervon ausgehend liegt der vorliegenden Erfindung die Aufgabe zugrunde, eine Doppelseiten-Planschleifmaschine zu schaffen, welche eine möglichst einfache und zuverlässige Einstellung der Lage des Maschinenoberteils relativ zu dem Maschinenuntergestell erlaubt.

Diese Aufgabe wird bei einer Doppelseiten-Planschleifmaschine der eingangs genannten Art erfindungsgemäß dadurch gelöst, dass die Einstelleinrichtung eine mit dem Maschinenuntergestell oder dem Maschinenoberteil verbundene Schraube und eine mit der Schraube verschraubte, das Maschinenoberteil abstützende Einstellmutter umfasst, wobei die Einstellmutter entlang ihrer Umfangsseite verteilte Ausnehmungen oder Vorsprünge aufweist, welche mit Vorsprüngen oder Ausnehmungen eines motorisch antreibbaren ersten Antriebselements formschlüssig in Eingriff stehen.

Die erfindungsgemäße Einstelleinrichtung zeichnet sich durch eine besonders robuste Bauweise aus. Die Einstellung eines Abstands im Bereich einer Einstelleinrichtung erfolgt durch einfaches Drehen der Einstellmutter, die das Maschinenoberteil abstützt. Dabei kann durch Wahl eines Gewindes mit einer niedrigen Steigung erreicht werden, dass ein relativ hoher Verdrehweg mit einer nur geringfügigen Verstellung des Abstands zwischen dem Maschinenoberteil und dem Maschinenuntergestell einhergeht, sodass eine besonders genaue Einstellung ermöglicht wird.

Die Einstellmutter weist entlang ihrer Umfangsseite verteilte Ausnehmungen oder Vorsprünge auf, welche mit Vorsprüngen oder Ausnehmungen eines motorisch antreibbaren ersten Antriebselements formschlüssig in Eingriff stehen. Der formschlüssige Eingriff der Vorsprünge in den Ausnehmungen ermöglicht eine zuverlässige Kraftübertragung des Antriebselements auf die Einstellmutter. Der Formschluss zwischen den Vorsprüngen und den Ausnehmungen ermöglicht es darüber hinaus, eine Bewegung des Antriebselements zu steuern und in Abhängigkeit der Bewegung des Antriebselements die Drehbewegung der Einstellmutter ermitteln zu können, ohne die Bewegung der Einstellmutter selbst erfassen zu müssen.

Vorzugsweise sind in mindestens zwei der Auflagebereiche jeweils eine Einstelleinrichtung vorgesehen. Insbesondere ist in jedem der Auflagebereiche eine Einstelleinrichtung vorgesehen.

Bei einer Ausführungsform der Erfindung ist vorgesehen, dass die Einstelleinrichtungen eine mit der Schraube verschraubte Kontermutter umfassen, welche gemeinsam mit der Einstellmutter das Maschinenoberteil oder das Maschinenuntergestell an der Schraube fixiert, und dass die Kontermutter entlang ihrer Umfangseite verteilte Ausnehmungen oder Vorsprünge aufweist, welche mit Vorsprüngen oder Ausnehmungen eines motorisch antreibbaren zweiten Antriebselements formschlüssig in Eingriff stehen. Die Kontermutter ermöglicht eine zuverlässige Fixierung einer eingestellten Relativlage zwischen Maschinenoberteil und Maschinenuntergestell. Besonders bevorzugt ist es, wenn die Kontermutter identisch zu der Einstellmutter ausgebildet ist, sodass auch das zweite Antriebselement identisch zu dem ersten Antriebselement ausgebildet sein kann. Die Motorisierung sowohl der Einstellmutter als auch der Kontermutter ermöglicht einen erheblichen Zeitvorteil im Vergleich zu einer manuell handhabbaren Einstelleinrichtung.

Alternativ hierzu ist es möglich, anstelle einer Kontermutter eine mit der Schraube verklemmbare Klemmeinrichtung vorzusehen. Die Klemmeinrichtung weist mindestens ein Klemmelement (beispielsweise in Form einer Federklemme oder eines Klemmstifts) auf, welches in einer Klemmlage mit der Schraube verklemmt ist und in einer Löselage eine Relativbewegung zwischen Klemmelement und Schraube ermöglicht. Zur Überführung des Klemmelements zwischen der Klemm- und der Löselage können elektromechanische, hydraulische oder pneumatische Antriebe verwendet werden.

Bevorzugt ist es ferner, wenn ein für den Antrieb wirksamer Durchmesser des Antriebselements der Einstellmutter und/oder der Kontermutter kleiner ist als ein für den Abtrieb wirksamer Durchmesser der Einstellmutter und/oder der Kontermutter. Dies hat den Vorteil, dass die Bewegung des Antriebselements so übersetzt werden kann, dass die Einstellmutter oder die Kontermutter mit einer niedrigeren Geschwindigkeit dreht, sodass eine besonders präzise Einstellung der Einstellmutter oder der Kontermutter ermöglicht wird.

Bei einer bevorzugten Ausführungsform ist vorgesehen, dass das erste Antriebselement und/oder das zweite Antriebselement durch ein Antriebsrad gebildet ist oder sind. Dies ermöglicht eine besonders kompakte Bauweise.

Bei einer weiteren Ausführungsform ist vorgesehen, dass das erste Antriebselement und/oder das zweite Antriebselement durch einen Antriebsriemen oder durch eine Antriebskette gebildet ist oder sind. Diese Antriebselemente ermöglichen eine besonders zuverlässige Kraftübertragung auf die Einstellmutter oder die Kontermutter.

Es ist möglich, dass die Ausnehmungen oder Vorsprünge der Einstellmutter und/oder der Kontermutter und die Vorsprünge oder Ausnehmungen des ersten Antriebselements und/oder des zweiten Antriebselements durch Verzahnungen gebildet sind, beispielsweise durch Grad- oder Schrägverzahnungen oder auch durch Schneckenverzahnungen, welche einen hohen Traganteil aufweisen.

Es ist aber auch möglich, dass die Ausnehmungen in Form von hohlzylindrischen Abschnitten ausgebildet sind, welche mit Vorsprüngen in Form von zylindrischen Abschnitten zusammenwirken. Hierdurch stehen besonders hohe Flächenanteile zur Übertragung eines Drehmoments zwischen einem Antriebselement und der Einstellmutter oder der Kontermutter zur Verfügung.

Ferner ist es vorteilhaft, wenn ein manuell betätigbares Handwerkzeug bereitgestellt wird, welches mindestens einen Vorsprung oder mindestens eine Ausnehmung aufweist, der oder die formidentisch mit einem der Vorsprünge oder einer der Ausnehmungen eines Antriebselements ist und der oder die zur Betätigung der Einstellmutter und/oder der Kontermutter anstelle des Antriebselements mit einer Ausnehmung oder einem Vorsprung der Einstellmutter und/oder der Kontermutter in einen formschlüssigen Eingriff bringbar ist. Auf diese Weise kann die Einstellmutter oder die Kontermutter bei Bedarf auch manuell verstellt werden, beispielsweise bei einem Defekt des motorischen Antriebs eines Antriebselements.

Eine besonders vorteilhafte Ausführungsform der Erfindung kennzeichnet sich dadurch, dass zum Antrieb des ersten Antriebselements ein erster Antriebsmotor vorgesehen ist und/oder dass zum Antrieb des zweiten Antriebselements ein zweiter Antriebsmotor vorgesehen ist, und dass zur Ansteuerung des ersten Antriebsmotors und/oder des zweiten Antriebsmotors eine Steuerungseinrichtung vorgesehen ist, welche den ersten Antriebsmotor und/oder den zweiten Antriebsmotor in Abhängigkeit eines mittels einer Abstandserfassungseinrichtung erfassten Abstands-Istwerts zwischen dem Maschinenuntergestell und dem Maschinenoberteil und in Abhängigkeit eines vorgegebenen Abstands-Sollwerts ansteuert. Der Abstands-Istwert wird vorzugsweise im Bereich einer Einstelleinrichtung erfasst, beispielsweise im Bereich einer durch die Schraube der Einstelleinrichtung vorgegebenen Schraubachse und/oder benachbart hierzu.

Bei einer weiteren Ausführungsform der Erfindung ist anstelle des ersten Antriebsmotors und eines zweiten Antriebsmotors ein Antriebsmotor zum Antrieb des ersten Antriebselements und des zweiten Antriebselements vorgesehen, wobei dem ersten Antriebselement eine erste Kupplung und dem zweiten Antriebselement eine zweite Kupplung vorgeschaltet ist, wobei die Kupplungen von der Steuerungseinrichtung ansteuerbar sind. Auf diese Weise kann eine Bewegung des Antriebsmotors wahlweise auf das erste Antriebselement oder auf das zweite Antriebselement übertragen werden.

Bei einer weiteren bevorzugten Ausführungsform ist eine Anzeigeeinrichtung zur Visualisierung des Abstands-Sollwerts und/oder des Abstands-Istwerts vorgesehen, sodass eine Bedienperson nachvollziehen kann, ob ein Einstellvorgang bereits abgeschlossen ist. Dies ist der Fall, wenn der Abstands-Istwert innerhalb einer vorgebbaren Toleranz dem Abstands-Sollwert entspricht.

Bevorzugt ist es insbesondere, wenn mindestens zwei Einstelleinrichtungen vorgesehen sind und wenn für unterschiedliche Einstelleinrichtungen unterschiedliche Abstands-Istwerte erfassbar sind und unterschiedliche Abstands-Sollwerte vorgebbar sind.

Vorzugsweise sind genau drei Einstelleinrichtungen vorgesehen, sodass die Lage des Maschinenoberteils relativ zu dem Maschinenuntergestell durch drei Auflager definiert ist.

Durch Vorgabe unterschiedlicher Abstands-Sollwerte kann auch eine automatisierte Tiltung erreicht werden, bei welcher die zweite Schleifscheibe des Maschinenoberteils nicht planparallel zu der ersten Schleifscheibe des Maschinenuntergestells ausgerichtet ist, sondern relativ zu der ersten Schleifscheibe um einen Tiltungswinkel geneigt ist.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Figur 1: eine perspektivische Ansicht einer Ausführungsform einer Doppelseiten-Planschleifmaschine;
- Figur 2: eine Seitenansicht einer manuell betätigbaren Einstelleinrichtung längs einer vertikalen Schnittebene;
- Figur 3: eine Draufsicht einer Ausführungsform einer motorisch betätigbaren Einstelleinrichtung;
- Figur 4: eine Draufsicht einer weiteren Ausführungsform einer motorisch betätigbaren Einstelleinrichtung; und
- Figur 5: eine schematische Ansicht einer Ausführungsform einer motorischen Antriebseinrichtung.

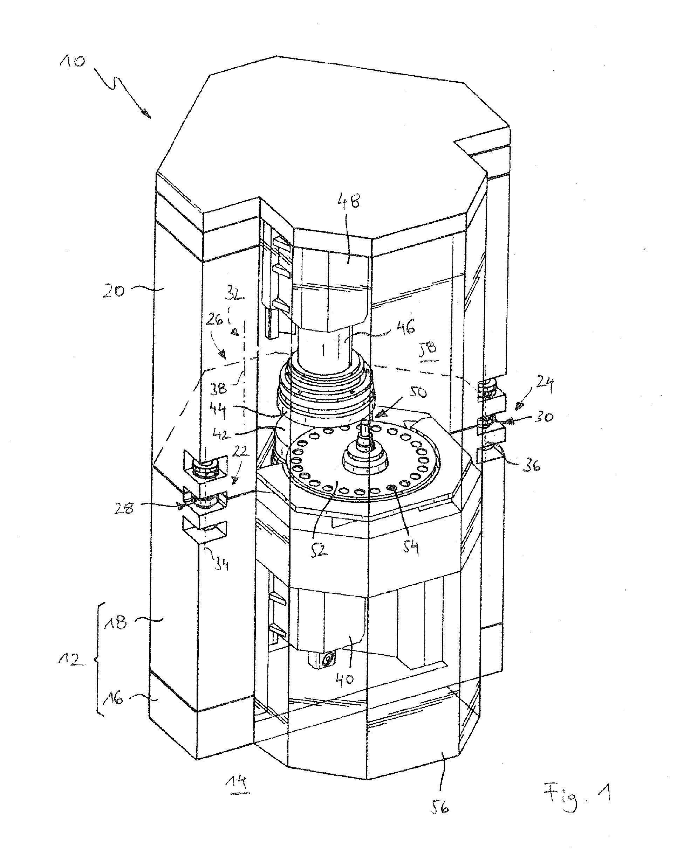

Eine Ausführungsform einer Doppelseiten-Planschleifmaschine (im Folgenden kurz: Planschleifmaschine) ist in Figur 1 mit dem Bezugszeichen 10 bezeichnet. Die Planschleifmaschine 10 weist ein Maschinenuntergestell 12 auf. Das Maschinenuntergestell 12 setzt sich beispielsweise aus einem auf einer Aufstandsfläche 14 aufstellbaren Maschinenfundament 16 und einem Maschinenunterteil 18 zusammen. Das Maschinenuntergestell 12 kann aber auch einstückig ausgebildet sein.

Die Planschleifmaschine 10 umfasst ferner ein Maschinenoberteil 20. Das Maschinenoberteil 20 stützt sich in drei Auflagebereichen 22, 24 und 26 an dem Maschinenuntergestell 12 ab. Jedem Auflagebereich ist eine eigene Einstelleinrichtung 28, 30, 32 zugeordnet (in Figur 1 ist die Einstelleinrichtung 32 durch das Maschinenoberteil verdeckt und daher nur angedeutet).

Jeder der Einstelleinrichtungen 28, 30, 32 ist eine Einstellachse 34, 36, 38 zugeordnet, entlang welcher im Bereich eines jeweiligen Auflagers 22, 24, 26 der Abstand zwischen dem Maschinenobergestell 20 und dem Maschinenuntergestell 12 einstellbar ist.

In dem Maschinenunterteil 18 ist ein Spindelkasten 40 angeordnet, in welchem eine nicht dargestellte Spindel zum Antrieb einer ersten Schleifscheibe 42 angeordnet ist. Eine zweite Schleifscheibe 44 ist mittels einer Spindel 46 drehbar angetrieben, welche in einem Spindelkasten 48 des Maschinenoberteils 20 gelagert ist.

Die erste Schleifscheibe 42 und die zweite Schleifscheibe 44 sind um einen Schleifspalt 50 relativ zueinander beabstandet. In diesen Schleifspalt 50 hinein kann ein an einem Werkstückhalter 52 gehaltenes, schematisch dargestelltes Werkstück 54 eingeführt und auf voneinander abgewandten Seiten mittels der Schleifscheiben 42 und 44 schleifend bearbeitet werden.

Ferner umfasst die Planschleifmaschine 10 eine Schutzverkleidung 56 zur Begrenzung eines Arbeitsraums 58.

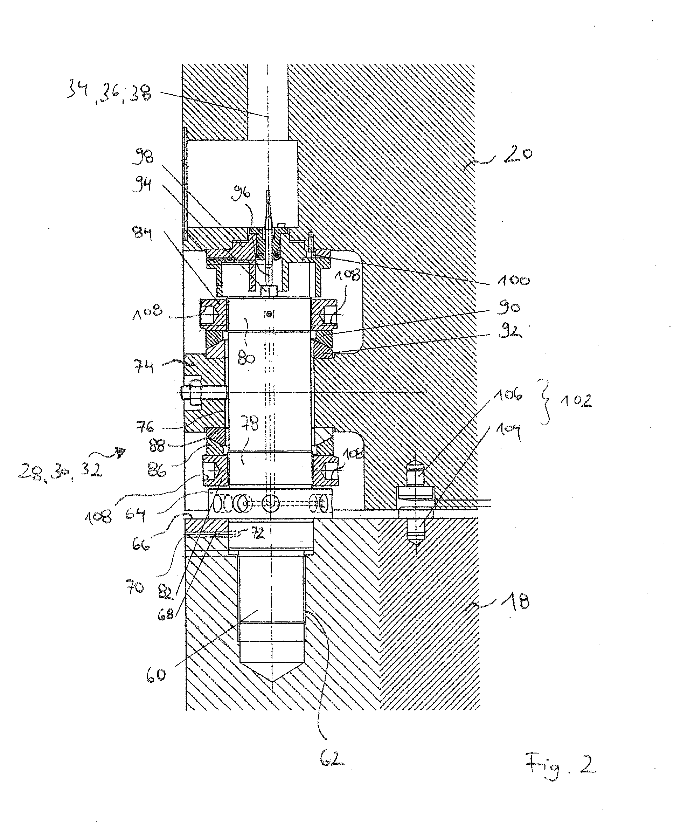

Der Aufbau der Einstelleinrichtungen 28, 30, 32 wird im Folgenden unter Bezugnahme auf Figur 2 erläutert. Die Einstelleinrichtungen umfassen eine Schraube 60, die mit einem unteren Teil in einer Schraubenaufnahme 62 des Maschinenunterteils 18 verschraubt ist. Dabei stützt sich die Schraube 60 mit einer Schulter 64 an einer Oberseite 66 des Maschinenunterteils 18 ab. Zur Drehfixierung der Schraube 60 in der Schraubenaufnahme 62 ist ein Fixierstift 68 vorgesehen. Der Fixierstift 68 wird in eine Stiftbohrung 70 eingeführt, welche erst nach Verschraubung der Schraube 60 in der Schraubenaufnahme 62 hergestellt wird, wobei in die Schraube 60 ein Sackloch 72 zur Aufnahme eines Teils des Fixierstifts 68 eingebracht wird.

Das Maschinenoberteil 20 weist einen ringförmigen Gehäuseabschnitt 74 auf, welcher im Bereich einer zylindrischen Durchbrechung 76 von einem oberen Abschnitt der Schraube 60 durchsetzt ist.

Die Schraube 60 weist jeweils unterhalb und oberhalb der Durchbrechung 76 angeordnete Gewindeabschnitte 78 und 80 auf. Der untere Gewindeabschnitt 78 wirkt mit einer Einstellmutter 82 zusammen. Der obere Gewindeabschnitt 80 wirkt mit einer Kontermutter 84 zusammen. Zwischen der Einstellmutter 82 und dem Gehäuseabschnitt 74 sind zwei Keilringe 86 und 88 angeordnet. Entsprechende Keilringe 90 und 92 sind zwischen dem Gehäuseabschnitt 74 und der Kontermutter 84 angeordnet.

An dem oberen Ende der Schraube 60 ist ein Anschlagelement 94 fixiert, welches mit einem federbeaufschlagten Stifttaster 96 zusammenwirkt. Der Stifttaster 96 ist an einer Halterung 98 gehalten, welche über eine Schraube 100 mit dem Maschinenoberteil 20 verbunden ist. Bei einer Verdrehung der Einstellmutter 82 in einer ersten Drehrichtung hebt die Einstellmutter 82 unter Zwischenschaltung der Keilringe 86 und 88 den Gehäuseabschnitt 84 an, wobei sich der Stifttaster 96 relativ zu der Stiftaufnahme 98 nach unten bewegt und in Kontakt mit dem Anlageelement 94 bleibt. Hierdurch ist es möglich, den Abstand zwischen dem Maschinenunterteil 18 und dem Maschinenoberteil 20 zu erfassen.

Zusätzlich oder alternativ hierzu kann auch eine Abstandserfassungseinrichtung 102 vorgesehen sein, welche beispielsweise ein mit dem Maschinenunterteil 18 verbundenes Referenzelement 104 und einen mit dem Maschinenoberteil 20 verbundenen Abstandssensor 106 umfasst.

In entsprechender Weise führt eine Verdrehung der Einstellmutter 82 in einer entgegengesetzten zweiten Drehrichtung zu einem Absenken des Maschinenoberteils 20 in Richtung auf das Maschinenunterteil 18. Die Verdrehung der Einstellmutter 82 setzt voraus, dass die Kontermutter 84 gelöst ist, welche sich ihrerseits über die Keilringe 90 und 92 an der oberen Seite des Gehäuseabschnitts 74 abstützt.

Die Einstellmutter 82 und die Kontermutter 84 weisen entlang ihres Umfangs verteilt angeordnete Ausnehmungen 108 auf. Die Ausnehmungen 108 sind in dem dargestellten Ausführungsbeispiel in Form hohlzylindrischer Abschnitte gebildet, welche beispielsweise durch einfache Sacklochbohrungen hergestellt sind. Die Ausnehmungen 108 erstrecken sich in bezogen auf die Achse der Schraube 60 radialen Richtungen.

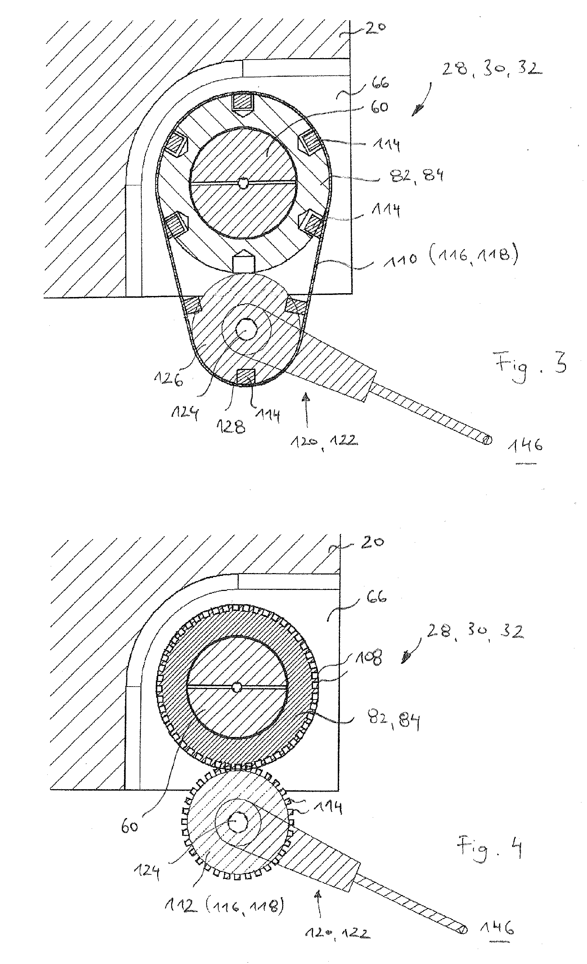

Die Einstellrichtungen 28, 30 und 32 umfassen in den Figuren 3 und 4 dargestellte Antriebselemente, beispielsweise in Form eines Antriebsriemens 110 (vgl. Figur 3) oder in Form eines Antriebsrades 112 (vgl. Figur 4).

Diese Antriebselemente sind in Figur 2 zur Verbesserung der Übersichtlichkeit nicht dargestellt. Sofern die in Figuren 3 und 4 dargestellten zusätzlichen Antriebselemente der Einstelleinrichtungen 28, 30, 32 nicht vorhanden oder defekt sein sollten, ist es möglich, die in Figur 2 dargestellten Einstelleinrichtungen 28, 30, 32 auch manuell zu betätigen, und zwar unter Verwendung eines (nicht dargestellten) Handwerkzeugs, welches einen Hebel aufweist und einen am Ende des Hebels vorgesehenen zylindrischen Vorsprung, der formschlüssig mit einer der Ausnehmungen 108 in Eingriff bringbar ist.

Unter Bezugnahme auf Figur 3 weist der Antriebsriemen 110 auf seiner Innenseite eine Mehrzahl von Vorsprüngen 114 auf, welche insbesondere in Form zylindrischer Abschnitte gebildet sind und in die hohlzylindrischen Abschnitte der Ausnehmungen 108 der Einstellmutter 82 oder der Kontermutter 84 eingreifen.

Dabei bildet der Antriebsriemen 110 bei Antrieb einer Einstellmutter 82 ein erstes Antriebselement 116 und bei Antrieb einer Kontermutter 84 ein zweites Antriebselement 118.

Zum Antrieb des Antriebsriemens 110 ist ein Antriebsmotor 120 vorgesehen, welcher bei Antrieb einer Einstellmutter 82 einen ersten Antriebsmotor 120 und bei Antrieb einer Kontermutter 84 einen zweiten Antriebsmotor 122 bildet. Der Antriebsmotor 120, 122 umfasst eine Motorachse 124, welche zum Antrieb eines Treiberrades 126 dient. Dieses weist mindestens eine Ausnehmung 128 zum Antrieb eines Vorsprungs 114 des Antriebsriemens 110 auf.

Bei der in Figur 4 dargestellten Einstelleinrichtung 28, 30, 32 dient die Motorachse 124 zum Antrieb eines Antriebsrads 112. Bei Verwendung des Antriebsrads 112 zum Antrieb einer Einstellmutter 82 bildet das Antriebsrad 112 ein erstes Antriebselement 116. Bei Antrieb einer Kontermutter 84 bildet das Antriebsrad 112 ein zweites Antriebselement 118.

Das Antriebsrad 112 weist eine Vielzahl von über den Umfang des Antriebsrads 112 angeordnete Vorsprünge 114 auf, welche vorzugsweise zylindrisch ausgebildet sind und in hohlzylindrische Ausnehmungen 108 der Einstellmutter 82 oder der Kontermutter 84 eingreifen.

Zur Einstellung der Relativlage des Maschinenoberteils 20 und des Maschinenuntergestells 12 werden für jede der Einstelleinrichtungen 28, 30, 32 Sollwerte vorgegeben. Ausgehend von einem an dem Maschinenuntergestell 12 fixierten Zustand des Maschinenobergestells 20 wird der zweite Antriebsmotor 122 zum Lösen der Kontermutter 84 betätigt. Anschließend wird der erste Antriebsmotor 120 zum Verdrehen der Einstellmutter 82 betätigt, bis mittels eines Messtasters 96 und/oder mittels der Abstandserfassungseinrichtung 102 ein vorgegebener Soll-Abstand zwischen dem Maschinenoberteil 20 und dem Maschinenuntergestell 12 erreicht ist. Schließlich wird mittels des zweiten Antriebsmotors 122 die Kontermutter 84 betätigt, um den Gehäuseabschnitt 74 und somit das Maschinenoberteil 20 an der Schraube 60 und somit an dem Maschinenunterteil 18 zu fixieren.

Wenn es gewünscht ist, dass die zweite Schleifscheibe 44 relativ zu der ersten Schleifscheibe 42 geneigt ist, können an den Einstelleinrichtungen 28, 30, 32 unterschiedliche Abstände zwischen dem Maschinenoberteil 20 und dem Maschinenuntergestellt 12 eingestellt werden. Ein entsprechendes Verkippen zwischen dem Maschinenoberteil 20 und dem Maschinenunterteil 18 kann mittels der Keilringe 86, 88 und 90, 92 aufgenommen werden.

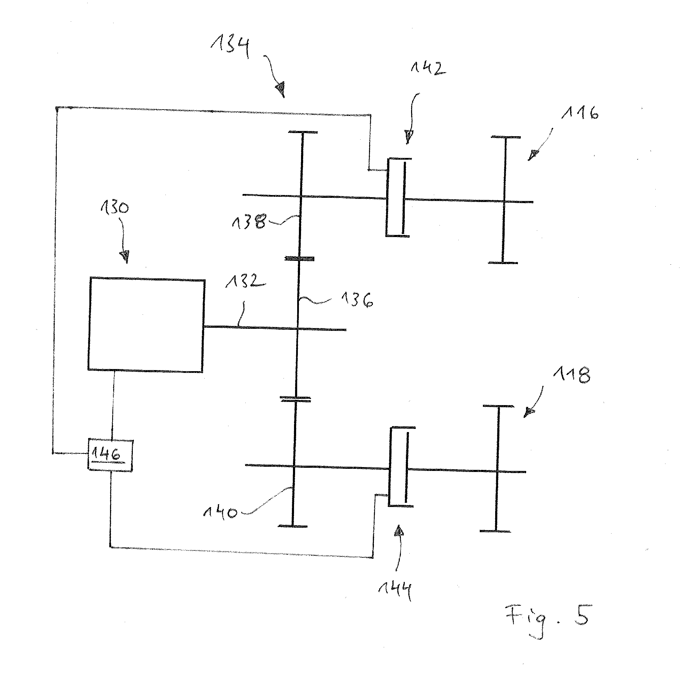

Eine weitere Ausführungsform einer motorischen Antriebseinrichtung zum Antrieb einer Einstelleinrichtung 28, 30, 32 ist in Figur 5 dargestellt. Diese Antriebseinrichtung umfasst genau einen Antriebsmotor 130. Der Antriebsmotor 130 dient zum Antrieb einer Antriebswelle 132, deren Bewegung mittels einer Kupplungseinrichtung 134 wahlweise auf ein erstes Antriebselement 116 oder auf ein zweites Antriebselement 118 übertragbar ist. Hierfür ist beispielsweise ein Getriebe vorgesehen, welches ein zentrales Getrieberad 136 aufweist, das mit der Antriebswelle 132 verbunden ist und zum Antrieb von Getrieberädern 138 und 140 dient. Der Durchtrieb zwischen dem Getrieberad 138 und dem ersten Antriebselement 116 kann mittels einer ersten Kupplung 142 hergestellt oder unterbrochen werden. Der Durchtrieb zwischen dem Getrieberad 140 und dem zweiten Antriebselement 118 kann mittels einer zweiten Kupplung 144 hergestellt oder unterbrochen werden.

Auf diese Weise kann mittels nur einem Antriebsmotor 130 sowohl ein motorischer Antrieb einer Einstellmutter 82 als auch einer Kontermutter 84 einer Einstelleinrichtung 28, 30, 32 vorgehalten werden.

Zur Steuerung der Antriebsmotoren 120, 122 ist eine Steuerungseinrichtung 146 vorgesehen. Eine solche Steuerungseinrichtung 146 dient - für den Fall, dass nur ein Antriebsmotor 130 und eine Kupplungseinrichtung 134 vorgesehen ist - sowohl zur Ansteuerung des Antriebsmotors 130 als auch zur Ansteuerung der Kupplungen 142, 144.

## Patentansprüche

1. Doppelseiten-Planschleifmaschine (10) mit einem Maschinenuntergestell (12), welches eine erste Schleifscheibe (42) umfasst, mit einem Maschinenoberteil (20), welches eine zweite Schleifscheibe (44) umfasst, wobei das Maschinenoberteil (20) in wenigstens drei Auflagebereichen (22, 24, 26) auf dem Maschinenuntergestell (12) aufliegt, wobei in mindestens einem der Auflagebereiche (22, 24, 26) eine Einstelleinrichtung (28, 30, 32) zur Einstellung der Lage des Maschinenoberteils (20) relativ zu dem Maschinenuntergestell (12) vorgesehen ist, **dadurch gekennzeichnet, dass** die Einstelleinrichtung (28, 30, 32) eine mit dem Maschinenuntergestell (12) oder dem Maschinenoberteil (20) verbundene Schraube (60) und eine mit der Schraube (60) verschraubte, das Maschinenoberteil (20) abstützende Einstellmutter (82) umfasst, wobei die Einstellmutter (82) entlang ihrer Umfangsseite verteilte Ausnehmungen (108) oder Vorsprünge aufweist, welche mit Vorsprüngen (114) oder Ausnehmungen eines motorisch antreibbaren ersten Antriebselements (116) formschlüssig in Eingriff stehen.

2. Doppelseiten-Planschleifmaschine (10) nach Anspruch 1, **dadurch gekennzeichnet, dass** die Einstelleinrichtungen eine mit der Schraube (60) verschraubte Kontermutter (84) umfassen, welche gemeinsam mit der Einstellmutter (82) das Maschinenoberteil (20) oder das Maschinenuntergestell (18) an der Schraube (60) fixiert, und dass die Kontermutter (84) entlang ihrer Umfangsseite verteilte Ausnehmungen (108) oder Vorsprünge aufweist, welche mit Vorsprüngen (114) oder Ausnehmungen eines motorisch antreibbaren zweiten Antriebselements (118) formschlüssig in Eingriff stehen.

3. Doppelseiten-Planschleifmaschine (10) nach einem der voranstehenden Ansprüche, **dadurch gekennzeichnet, dass** ein für den Antrieb wirksamer Durchmesser des Antriebselements (116, 118) der Einstellmutter (82) und/oder der Kontermutter (84) kleiner ist als ein für den Abtrieb wirksamer Durchmesser der Einstellmutter (82) und/oder der Kontermutter (84).

4. Doppelseiten-Planschleifmaschine (10) nach einem der voranstehenden Ansprüche, **dadurch gekennzeichnet, dass** das erste Antriebselement (116) und/oder das zweite Antriebselement (118) durch ein Antriebsrad (112) gebildet ist oder sind.

5. Doppelseiten-Planschleifmaschine (10) nach einem der voranstehenden Ansprüche, **dadurch gekennzeichnet, dass** das erste Antriebselement (116) und/oder das zweite Antriebselement (118) durch einen Antriebsriemen (110) oder durch eine Antriebskette gebildet ist oder sind.

6. Doppelseiten-Planschleifmaschine (10) nach einem der voranstehenden Ansprüche, **dadurch gekennzeichnet, dass** die Ausnehmungen (108) oder Vorsprünge der Einstellmutter (82) und/oder der Kontermutter (84) und die Vorsprünge (114) oder Ausnehmungen des ersten Antriebselements (116) und/oder des zweiten Antriebselements (118) durch Verzahnungen gebildet sind.

7. Doppelseiten-Planschleifmaschine (10) nach einem der voranstehenden Ansprüche, **dadurch gekennzeichnet, dass** die Ausnehmungen (108) in Form von hohlzylindrischen Abschnitten ausgebildet sind, welche mit Vorsprüngen (114) in Form von zylindrischen Abschnitten zusammenwirken.

8. Doppelseiten-Planschleifmaschine (10) nach einem der voranstehenden Ansprüche, **gekennzeichnet durch** ein manuell betätigbares Handwerkzeug, welches mindestens einen Vorsprung oder mindestens eine Ausnehmung aufweist, der oder die formidentisch mit einem der Vorsprünge (114) oder einer der Ausnehmungen eines Antriebselements (116, 118) ist und der oder die zur Betätigung der Einstellmutter (82) und/oder der Kontermutter (84) anstelle des Antriebselements (116, 118) mit einer Ausnehmung (108) oder einem Vorsprung der Einstellmutter (82) und/oder der Kontermutter (84) in einen formschlüssigen Eingriff bringbar ist.

9. Doppelseiten-Planschleifmaschine (10) nach einem der voranstehenden Ansprüche, **dadurch gekennzeichnet, dass** zum Antrieb des ersten Antriebselements (116) ein erster Antriebsmotor (120) vorgesehen ist und/oder dass zum Antrieb des zweiten Antriebselements (118) ein zweiter Antriebsmotor (122) vorgesehen ist, und dass zur Ansteuerung des ersten Antriebsmotors (120) und/oder des zweiten Antriebsmotors (122) eine Steuerungseinrichtung (146) vorgesehen ist, welche den ersten Antriebsmotor (120) und/oder den zweiten Antriebsmotor (122) in Abhängigkeit eines mittels einer Abstandserfassungseinrichtung (102) erfassten Abstands-Istwerts zwischen dem Maschinenuntergestell (12) und dem Maschinenoberteil (20) und in Abhängigkeit eines vorgegebenen Abstands-Sollwerts ansteuert.

10. Doppelseiten-Planschleifmaschine (10) nach Anspruch 9, **dadurch gekennzeichnet, dass** anstelle des ersten Antriebsmotors (120) und eines zweiten Antriebsmotors (122) ein Antriebsmotor (130) zum Antrieb des ersten Antriebselements (116) und des zweiten Antriebselements (118) vorgesehen ist, und dass dem ersten Antriebselement eine erste Kupplung (142) und dem zweiten Antriebselement (118) eine zweite Kupplung (144) vorgeschaltet ist, wobei die Kupplungen (142, 144) von der Steuerungseinrichtung (146) ansteuerbar sind.

11. Doppelseiten-Planschleifmaschine (10) nach Anspruch 9 oder 10, **gekennzeichnet durch** eine Anzeigeeinrichtung zur Visualisierung des Abstands-Sollwerts und/oder des Abstands-Istwerts.

12. Doppelseiten-Planschleifmaschine (10) nach einem der Ansprüche 9 bis 11, **dadurch gekennzeichnet, dass** mindestens zwei Einstelleinrichtungen (28, 30, 32) vorgesehen sind und dass für unterschiedliche Einstelleinrichtungen (28, 30, 32) unterschiedliche Abstands-Istwerte erfassbar sind und unterschiedliche Abstands-Sollwerte vorgebbar sind.
